# EUROPÄISCHE PATENTSCHRIFT

(11) **EP 1 886 093 B1**
(45) Veröffentlichungstag und Bekanntmachung des Hinweises auf die Patenterteilung: **15.04.2009**
(21) Anmeldenummer: 06753757.1
(22) Anmeldetag: 20.05.2006
(51) Int. Cl.: G01C 21/32

(54) **VERFAHREN ZUR BESTIMMUNG DER GEOMETRIE EINES STRECKENABSCHNITTES**
METHOD FOR DETERMINING THE GEOMETRY OF A ROUTE SECTION
PROCEDE POUR DETERMINER LA GEOMETRIE D'UN TRONÇON DE ROUTE

(30) Priorität: 28.05.2005 DE 102005024558
(43) Veröffentlichungstag der Anmeldung: 13.02.2008
(73) Patentinhaber: Daimler AG, 70327 Stuttgart (DE)
(72) Erfinder: GEHRING, Ottmar, 71394 Kermen (DE); HOLZMANN, Frédéric, 93073 Neutraubling (DE); PAASCHE, Sascha, 150-0003 Tokyo (JP); SCHWARZHAUPT, Andreas, 76829 Landau (DE); SPIEGELBERG, Gernot, 93077 Bad Abbach (DE); SULZMANN, Armin, 69115 Heidelberg (DE)
(74) Vertreter: JENSEN & SON
(86) Internationale Anmeldenummer: PCT/EP2006/004800
(87) Internationale Veröffentlichungsnummer: WO 2006/128601

(56) Entgegenhaltungen:
- EP-A- 0 789 225
- EP-A- 0 890 823
- EP-A- 1 086 844
- DE-A1- 10 353 320
- DE-A1- 19 815 855
- DE-C1- 10 114 412

## Beschreibung

Die Erfindung betrifft ein Verfahren zur Bestimmung der Geometrie eines Streckenabschnittes gemäß dem Oberbegriff des Anspruchs 1.

Die Geometrie wird dabei unter Verwendung von Streckenpunkten bestimmt, wobei die Streckenpunkte Information über die Streckenabschnitte, beispielsweise über deren geographische Anordnung, repräsentieren. Aus der bestimmten Geometrie wird dann eine maximal mögliche Geschwindigkeit für ein den Streckenabschnitt befahrendes Fahrzeug ermittelt, beispielsweise in einer voraus liegenden Kurve.

EP1086844A offenbart ein \/erfahren gemäß dem Oberbegriff des Anspruch 1.

Ein derartiges Verfahren ist auch aus der US 6 138 084 bekannt. Hierbei ist vorgesehen, einen Kreisbogen durch jeweils drei Streckenpunkte vorzusehen. Jedoch ergibt sich hier ein Problem bei nicht exakt lokalisierten Streckenpunkten, da der Kreisbogen dann nicht mit der Geometrie des tatsächlichen Streckenabschnittes übereinstimmt.

Eine Verbesserung wird in der US 6 343 253 B1 vorgeschlagen. Dazu wird ein einzelner, singulärer Streckenpunkt gesondert behandelt. Damit ergibt sich in speziellen Fällen eine etwas bessere Bestimmung der Geometrie eines Streckenabschnitts.

Ein verbessertes Verfahren ist aus der US 6163741 bekannt. Hierbei werden neben der Anzahl der Streckenpunkte auf einer Kurve auch die Länge eines Kreisbogens bzw. Besonderheiten der Kurve wie beispielsweise eine mögliche S-Form berücksichtigt. Hiermit ergibt sich eine verbesserte Bestimmung der Geometrie eines Streckenabschnittes, wozu jedoch relativ aufwendige Berechnungen erforderlich sind.

In der US 2004/0111209 A1 wird vorgeschlagen, eine Grenzgeschwindigkeit pro Streckenabschnittspunkt vorzusehen. Somit kann für Streckenabschnittspunkte eine maximale Verzögerung bestimmt werden und/oder ein örtlicher Endpunkt der Verzögerung. Dieses verbesserte Vorgehen erfordert jedoch eine aufwendige Datenerhebung und -verarbeitung, indem die Grenzgeschwindigkeiten für die einzelnen Streckenpunkte zu ermitteln sind.

Ausgehend von diesem bekannten Stand der Technik ergibt sich die Aufgabe der Erfindung, ein Verfahren anzugeben, welches relativ einfach und unaufwendig die Bestimmung der Geometrie eines Streckenabschnittes ermöglicht.

Erfindungsgemäß ist vorgesehen, dass geprüft wird, ob zwei benachbarte Streckenpunkte jeweils vorgebbaren Abstand zueinander unterschreiten und Bejahenderweise Streckenabschnittsdaten durch die wenigstens drei benachbarten Streckenpunkte berechnet werden als a) Gerade, wenn die Streckenpunkte in einem geraden Streifen vorgebbarer Breite angeordnet sind, oder b) Kreisbogen, wenn die Streckenpunkte in einem konstant gekrümmten Streifen vorgebbarer Breite angeordnet sind und die Tangente am in Fahrtrichtung ersten der Streckenpunkte im Wesentlichen auf einem Richtungsvektor des Fahrzeuges zu liegen kommt, oder c) Klothoide, wenn die Streckenpunkte in einem progressiv gekrümmten Streifen vorgebbarer Breite angeordnet sind, wobei jeweils die Geometrie des Streckenabschnittes im Bereich dieser Streckenpunkte in Form der berechneten Streckenabschnittsdaten bestimmt wird. Anders ausgedrückt werden drei Hypothesen über die Geometrie des Streckenabschnittes aufgestellt und nacheinander geprüft, welche dieser Hypothesen aktuell zutrifft. Denn gemäß den offiziellen "Richtlinien für die Anlage von Straßen" sind (nahezu) alle Streckenabschnitte genau einem dieser drei Typen zuzuordnen. Somit ist eine schnelle und einfache Prüfung dadurch möglich, dass auf Existenz einer entsprechend den aktuellen Streckenpunkten parametrisierten Geraden bzw. Kreisbogen bzw. Klothoide geprüft wird.

Die Erfindung ermöglicht eine relativ unaufwendige Bestimmung der Geometrie eines vorausliegenden Streckenabschnitts. Ausgehend von wenigstens drei verfügbaren Streckenpunkten wird zuerst das Modell einer Gerade berechnet. Hierzu wird geprüft, ob die verfügbaren Streckenpunkte innerhalb eines Streifens vorgebbarer Breite angeordnet sind. Solange dies der Fall ist, wird der Streckenabschnitt als Gerade gesetzt. Wenn ein oder mehrere Streckenpunkte außerhalb der vorgebbaren Breite angeordnet sind, wird die hypothetische Betrachtung als Gerade abgebrochen und die Gleichung eines Kreisbogens aufgestellt, wobei der Kreisbogen bestmöglich durch die verfügbaren Streckenpunkte verläuft. Hierzu muss außerdem die Tangente am ersten Streckenpunkt in Fahrtrichtung gesehen im Wesentlichen auf einem (vergangenen, aktuellen oder zukünftigen) Richtungsvektor des Fahrzeuges zu liegen kommen, d.h. es darf kein 'Knick' in der Strecke vorkommen. Falls dies nicht möglich ist, wird das Kreisbogenmodell zugunsten der Klothoide, die entsprechend angepasst wird, verworfen.

Dieses erfindungsgemäße Vorgehen stellt eine relativ einfache Möglichkeit dar, die vorausliegende Geometrie eines Streckenabschnittes zu bestimmen. Es ermöglicht dabei verhältnismäßig genaue Ergebnisse, da es jeweils den zugrunde liegenden Typ eines Streckenabschnitts, nämlich Gerade, Kreisbogen oder Klothoide, entsprechend berücksichtigt. Durch die jeweilige Hypothese den Streckenabschnitt als Gerade, Kreisbogen bzw. Klothoide anzusetzen, ergibt sich eine relativ schnelle Entscheidung, welche Art von Streckenabschnitt anzusetzen ist. Da diese drei Grundmodelle eines jeweiligen Streckenabschnittes durch die jeweiligen Parameter einfach anzupassen sind, ergibt sich mit wenig Aufwand eine relativ genaue Modellierung des Streckenabschnitts.

Vorzugsweise werden die Streckenabschnittsdaten durch die Streckenpunkte unter Verwendung der Methode der kleinsten Fehlerquadrate berechnet, d.h. die Prüfung wird unter Verwendung der Methode der kleinsten Fehlerquadrate durchgeführt. Dies ermöglicht eine schnelle Entscheidung für eine der drei erfindungsgemäßen Hypothesen, den Streckenabschnitt als Gerade oder Kreisbogen oder Klothoide zu bestimmen. Hierbei bilden Gerade bzw. Kreisbogen bzw. Klothoide sozusagen die "Schwerpunktslinie" der Streckenabschnittsdaten.

Es hat sich gezeigt, dass als vorgebbare Breite für einen Streifen, in dem die Streckenpunkte angeordnet sind, vorzugsweise etwa zwei Meter angesetzt sind. Eine derartige Breite ist als näherungsweise Breite einer Fahrspur besonders geeignet.

Die Streckenpunkte können dabei als Knoten und/oder Zwischenknoten ('shape points') aus einer digitalen Straßenkarte gewonnen werden. Digitale Straßenkarten sind beispielsweise von Navigationssystemen umfasst, welche bereits in einer Vielzahl moderner Fahrzeuge verfügbar sind. Indem solche digitalen Straßenkarten von Spezialfirmen erstellt werden, liegen relativ genaue Streckenpunkte mit Information über die Streckenabschnitte in den Knoten bzw. Zwischenknoten vor. Wenn die aktuelle Fahrtroute bekannt ist, ist eine Vorausschau über die mit hoher Wahrscheinlichkeit befahrenen Streckenabschnitte möglich. Jedoch sind nur solche Streckenpunkte verfügbar, die in der digitalen Straßenkarte enthalten sind, d.h. es können nicht beliebig "feine" Streckenpunkte gewonnen werden.

Alternativ oder zusätzlich kann vorgesehen sein, Streckenpunkte unter Verwendung eines fahrzeugseitigen Positionsbestimmungsmittels, insbesondere eines GPS- und/oder GALILEO-Empfängers, zu gewinnen. Dies ist beispielsweise dann von Vorteil, wenn die aktuelle Fahrtroute nicht bekannt ist oder wenn keine (vollständige) digitale Straßenkarte fahrzeugseitig verfügbar ist, z.B. in einem Mauterfassungsgerät. Hiermit sind Streckenpunkte beliebig "fein" gewinnbar, z.B. jede Sekunde ein Streckenpunkt.

Eine weitere Möglichkeit stellt die Gewinnung von Streckenpunkten unter Verwendung einer Bilderfassung und -auswertung, insbesondere eines Videosystems, dar. Dabei werden die Streckenpunkte durch eine entsprechende Bildauswertung bspw. der Videokamera gewonnen. Die Videokamera kann die Straße direkt 'sehen' und somit Streckenpunkten mit Information über vorausliegende Streckenabschnitte gewinnen. Dabei ist jedoch die Videokamera lokal beschränkt, indem sie nur das sieht, was ein Fahrer im Fahrzeug auch sieht. Dabei kann die Videokamera im Fahrzeug selbst vorgesehen sein oder auch über eine Fahrzeug-Fahrzeug-Kommunikation von einem vorausfahrenden Fahrzeug zugeschaltet werden. Auch hiermit sind Streckenpunkte beliebig "fein" gewinnbar, z.B. jede Sekunde ein Streckenpunkt.

Vorzugsweise werden zwei oder mehr der Verfahren zur Gewinnung von Streckenpunkten miteinander kombiniert, um ein präzises Ergebnis zu erhalten, indem beispielsweise die 'lokale' Videokamera und die 'globale' digitale Straßenkarte miteinander kombiniert werden. Während die Videokamera die Streckenpunkte in beliebigen Abständen aufnehmen kann, sind digitale Karten mit Knoten bzw. Zwischenknoten als Streckenpunkten in unterschiedlichen, fest vorgegebenen Abständen vorgesehen. Insoweit ergibt sich eine gute Ergänzung. Die aktuelle Position des Fahrzeuges wird vorzugsweise mit einem oder dem Positionsbestimmungsmittel, zum Beispiel GPS, Glonass oder GALILEO, gewonnen.

In einer besonders bevorzugten Ausführungsform der Erfindung ist vorgesehen, dass für den Fall, dass ein neuer Streckenpunkt verfügbar ist, die Geometrie des Streckenabschnittes dann beibehalten wird, wenn der Abstand des neuen Streckenpunktes zum letzten Streckenpunkt den jeweils vorgebbaren Abstand unterschreitet und wenn der neue Streckenpunkt auf der durch den wenigstens drei Streckenpunkten bestimmten Gerade bzw. Kreisbogen bzw. Klothoide angeordnet ist, andernfalls geprüft wird, ob der neue sowie die beiden in Fahrtrichtung liegenden letzten Streckenpunkte jeweils vorgebbare Abstände zueinander unterschreiten und Bejahenderweise Streckenabschnittsdaten durch diese Streckenpunkte berechnet werden als a) Gerade, wenn die Streckenpunkte in einem geraden Streifen vorgebbarer Breite angeordnet sind, oder b) Kreisbogen, wenn die Streckenpunkte in einem konstant gekrümmten Streifen vorgebbarer Breite angeordnet sind und die Tangente am in Fahrtrichtung ersten der Streckenpunkte im Wesentlichen auf einem Richtungsvektor des Fahrzeuges zu liegen kommt, oder c) Klothoide, wenn die Streckenpunkte in einem progressiv gekrümmten Streifen vorgebbarer Breite angeordnet sind, wobei jeweils die Geometrie des Streckenabschnittes im Bereich dieser Streckenpunkte in Form der berechneten Streckenabschnittsdaten bestimmt wird. Indem für jeden neu verfügbaren Streckenpunkt dieses Vorgehen durchgeführt wird, ergibt sich eine schnelle Anpassung an neue Streckengeometrien. Diese iterative Methode sorgt dafür, dass jeder neue Streckenpunkt zuerst darauf geprüft wird, ob er die bisherige Streckengeometrie weiterhin erfüllt und ansonsten geprüft wird, welche neue Art von Streckengeometrie ausgewählt aus Gerade, Kreisbogen oder Klothoide die Punkte bilden. Ein solches Vorgehen sichert eine besonders schnelle, einfache und flexible Bestimmung eines vorausliegenden Streckenabschnittes. Solange ein neuer Streckenpunkt auf der bereits bekannten Geometrie zu liegen kommt, wird diese Geometrie weitergeführt. Andernfalls wird die angepasste neue Geometrie bestimmt. Somit ergibt sich eine fortlaufende Folge von Geometrien der Streckenabschnitte.

In einer vorteilhaften Weiterbildung der besonders bevorzugten Ausführungsform ist vorgesehen, dass für den Fall, dass ein neuer Streckenpunkt verfügbar ist, welcher den vorgebbaren Abstand überschreitet, eine Gerade als Streckengeometrie angenommen wird. Dies trägt dem Umstand Rechnung, dass in digitalen Straßenkarten Geraden üblicherweise durch weit auseinander liegende Streckenpunkte repräsentiert werden, um entsprechend Speicherplatz zu sparen.

Eine weitere vorteilhafte Weiterbildung der besonders bevorzugten Ausführungsform sieht vor, dass wenn ein neuer Streckenabschnitt verfügbar ist der außerhalb des Streifens vorgebbarer Breite angeordnet ist, geprüft wird, ob der neue Streckenpunkt Teil einer Straßenkreuzung ist. Eine solche Prüfung kann beispielsweise umfassen, ob die Geometrie des aktuellen Streckenabschnittes als Gerade oder Kreisbogen bzw. Klothoide leichter Krümmung bestimmt wurde, oder die Ansteuerung der Gewinnung weiterer Streckenpunkte um eine Entscheidung abzusichern. Eine Straßenkreuzung erfordert besondere Steuerungseingriffe am Fahrzeug, beispielsweise die fahrzeugseitigen Einstellung einer Straßenkreuzungs-Geschwindigkeit, und somit ist eine schnelle Erkennung einer Straßenkreuzung nötig. Da eine solche Straßenkreuzung vorzugsweise auf geraden bzw. leicht gekrümmten Strecken angeordnet ist und Streckenpunkte umfasst, welche nahe der bisher befahrenen Stecke angeordnet sind, ergibt sich hiermit eine einfache Erkennung von Straßenkreuzungen in der Straßengeometrie. Jedoch kann die Geometrie des Streckenabschnittes trotz der Straßenkreuzung möglicherweise beibehalten werden.

Vorzugsweise wird die Geschwindigkeit des Fahrzeuges abhängig von der bestimmten Geometrie des Streckenabschnittes derart ermittelt, dass eine lineare Geschwindigkeitsänderung auf die maximal mögliche Geschwindigkeit für den voraus liegenden Streckenabschnitt bzw. eine Straßenkreuzung vorgenommen wird. Mit dieser linearen Geschwindigkeitsänderung wird eine komfortable Konstantverzögerung des Fahrzeuges realisiert. Der derart ermittelte Geschwindigkeitsverlauf kann dann zur Ansteuerung eines fahrzeugseitigen Geschwindigkeits-Regelsystems genutzt werden. Alternativ oder zusätzlich ist vorgesehen, bei einem Überschreiten der ermittelten Geschwindigkeit durch die aktuelle Fahrzeuggeschwindigkeit optische, akustische und/oder haptische Ausgaben an den Fahrzeugführer vorzunehmen. Weiterhin kann in bestimmten Fällen, beispielsweise bei einer beträchtlichen Überschreitung, ein automatischer Bremseingriff am Fahrzeug vorgesehen sein. Dabei wird die maximal mögliche Geschwindigkeit für einen Streckenabschnitt vorzugsweise fahrzeugabhängig ermittelt, um z.B. den unterschieden zwischen Pkw und Lkw Rechnung zu tragen. So kann im Bereich der Straßenkreuzung für Lkw eine maximale Geschwindigkeit von 10 km/h vorgesehen sein. Aus den Klothoiden- und Kreisbogenmodellen können Kurvenradien und damit über die Fliehkraft eine jeweilige zulässige Höchstgeschwindigkeit ermittelt werden, sodass das Fahrzeug nicht von der Strecke abkommt.

Die Erfindung wird nun anhand einer Zeichnung erläutert. Dabei zeigen:
- Fig. 1: beispielhaft als Gerade bzw. als Kreisbogen bestimmte Streckenabschnitte mit jeweiligen Streckenpunkten;
- Fig. 2: beispielhaft eine Modellierung von jeweils drei Streckenpunkten als Gerade, Kreisbogen, Klothoide;
- Fig. 3: beispielhaft eine Strecke als zusammengesetzte Abfolge verschiedenen Streckenabschnitte;
- Fig. 4: beispielhaft das Verzögerungsmodell für verschiedene Typen von Streckenabschnitten;
- Fig. 5: beispielhaft das Verzögerungsmodell für verschieden parametrisierte Klothoiden.

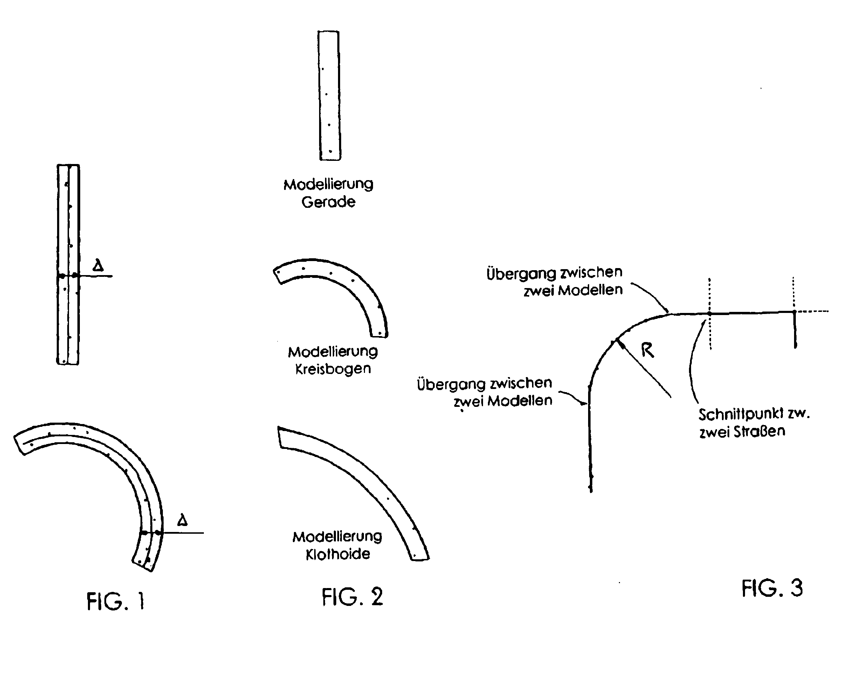

In den Fig. 1a und 1b sind beispielhaft als Gerade bzw. als Kreisbogen bestimmte Streckenabschnitte mit jeweiligen Streckenpunkten dargestellt. Die Streckepunkte sind in dem strichliert dargestellten Streifen mit der Breite Δ angeordnet und unterschreiten jeweils vorgebbare Abstände zueinander, wobei diese Abstände unterschiedlich sein können. Natürlich kann auch die Breite Δ unterschiedlich sein für verschiedene Streckenabschnitte. Die durchgezogene Linie in der Mitte des jeweiligen Streckenabschnittes stellt die Streckenabschnittsdaten und damit die Geometrie des Streckenabschnittes dar.

Fig. 2a, b, c zeigt beispielhaft eine Modellierung von jeweils drei Streckenpunkten als Gerade, Kreisbogen, Klothoide. Die Streckepunkte in Fig. 2a sind in einem strichliert dargestellten geraden Streifen vorgebbarer Breite angeordnet und unterschreiten jeweils vorgebbare Abstände zueinander, womit die Streckenabschnittsdaten als entsprechende Gerade berechnet werden. Die Streckepunkte in Fig. 2b sind in einem strichliert dargestellten konstant gekrümmten Streifen vorgebbarer Breite angeordnet und unterschreiten jeweils vorgebbare Abstände zueinander und die Tangente am in Fahrtrichtung ersten der Streckenpunkte kommt im Wesentlichen auf einem Richtungsvektor des Fahrzeuges zu liegen, womit die Streckenabschnittsdaten als entsprechender Kreisbogen berechnet werden. Die Streckepunkte in Fig. 2c sind in einem strichliert dargestellten progressiv gekrümmten Streifen vorgebbarer Breite angeordnet und unterschreiten jeweils vorgebbare Abstände zueinander, womit die Streckenabschnittsdaten als entsprechende Klothoide berechnet werden.

Fig. 3 zeigt beispielhaft eine Strecke als zusammengesetzte Abfolge verschiedener Streckenabschnitte. An einen in Fahrtrichtung ersten, als Gerade modellierten Streckenabschnitt schließt sich ein als Kreisbogen modellierter Streckenabschnitt mit Radius R und sodann ein weiterer als Gerade modellierter Streckenabschnitt an. Dieser letzte Streckenabschnitt weist zwei Straßenkreuzungen auf, d.h. Schnittpunkte mit punktiert gezeichneten Strecken welche nicht auf der Fahrtroute des Fahrzeugs liegen.

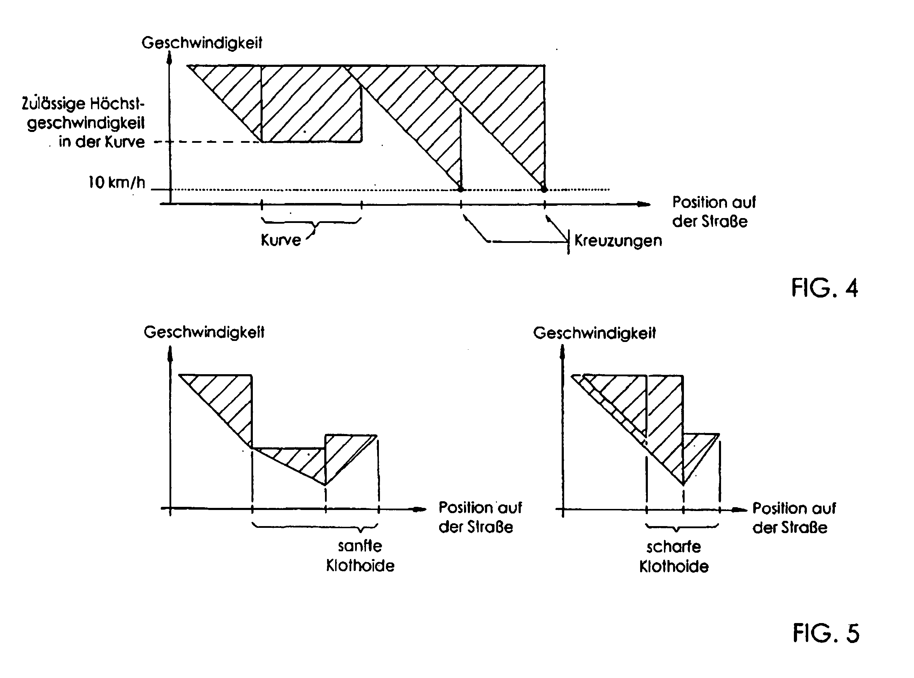

In den Fig. 4 und 5 ist jeweils die Fahrzeuggeschwindigkeit über der zurückgelegten Strecke aufgetragen. Die strichlierten Gebiete geben in den jeweiligen Verzögerungsbereichen den Unterschied zwischen der anfänglichen Fahrzeuggeschwindigkeit und der maximalen Geschwindigkeit in den jeweiligen Streckenabschnitten an. Diese maximale Geschwindigkeit wird entweder durch ein automatisches Geschwindigkeits-Regelsystem fahrzeugseitig eingestellt, oder es erfolgt eine Warnung an den Fahrer des Fahrzeugs wenn er bei manueller Steuerung diese Geschwindigkeit an einer jeweiligen Ortspositon überschreitet.

Fig. 4 zeigt beispielhaft das Verzögerungsmodell für verschiedene Typen von Streckenabschnitten. Von der anfänglich beliebig hohen Geschwindigkeit auf einer Gerade verzögert das Fahrzeug zuerst linear auf die zulässige Höchstgeschwindigkeit der voraus liegenden Kurve mittels komfortabler Konstantverzögerung. Anschließend wird die Kurve mit konstanter Geschwindigkeit entsprechend der zulässigen Höchstgeschwindigkeit durchfahren. Nach einer kurzen Beschleunigungsphase erfolgt sodann ein Herunterbremsen auf eine Geschwindigkeit von 10 km/h, zum sicheren Passieren einer Straßenkreuzung. Nach einer weiteren kurzen Beschleunigungsphase erfolgt ein erneutes Herunterbremsen auf eine Geschwindigkeit von 10 km/h, zum sicheren Passieren einer weiteren Straßenkreuzung. Die sich anschließende Gerade kann wiederum mit einer beliebig hohen Geschwindigkeit, beispielsweise einer vom Fahrer eingestellten Wunschgeschwindigkeit, befahren werden.

Fig. 5 zeigt beispielhaft das Verzögerungsmodell für verschieden parametrisierte Klothoiden. Dabei zeigt Fig. 5a die Verzögerung für eine "sanfte" Klothoide und Fig. 5b die Verzögerung für eine "scharfe" Klothoide.

### Bevorzugte Ausführungsform der Erfindung

In der bevorzugten Ausführungsform der Erfindung ist ein Fahrzeug vorgesehen, welches neben einem Empfänger für GPS-Signale zusätzlich eine Kamera mit nachgeschalteter Bildverarbeitung sowie eine digitale Straßenkarte umfasst. Die Kamera wertet lokal die vor dem Fahrzeug liegenden Streckenabschnitte aus. Die Signale des GPS-Empfängers liefern Information über den aktuellen Standort des Fahrzeuges. Die digitale Straßenkarte liefert auf der Fahrtstrecke des Fahrzeugs vorausliegende Streckenpunkte. Die Straßenkarte ist einem Navigationssystem zugeschaltet, in welchem das Fahrtziel eingegeben wurde. Hierdurch ist die zu fahrende Strecke bereits bekannt. Um ein besonders präzises Ergebnis über vorausliegende Streckenpunkte zu erhalten, werden die lokalen Ergebnisse der Kamera und die globalen Kenntnisse der digitalen Straßenkarte miteinander kombiniert. Das Verfahren mit GPS ist dabei in seiner Genauigkeit von der Genauigkeit der verwendeten digitalen Straßenkarte abhängig. Fehler in der Karte können dabei durch die Bildauswertung der Kamera (Videosystem) korrigiert werden. Weiterhin wird die Genauigkeit der Streckenpunkte, die von der digitalen Straßenkarte bereitgestellt werden, durch die durch das Videosystem bereitgestellten Streckenpunkte gestützt. Falls die durch das Videosystem verfügbaren Streckenpunkte nicht genau genug bzw. gar nicht erhältlich sind, beispielsweise weil ein anderes Fahrzeug vor dem Fahrzeug herfährt, kann auf die Streckenpunkte der digitalen Straßenkarte zurückgegriffen werden. Sowohl die Kamera mit nachgeschalteter Bildauswertung als auch die digitale Straßenkarte können sowohl Streckenpunkte liefern die auf bevorstehende Kurven hinweisen als auch Streckenpunkte die auf vorausliegende Straßenkreuzungen hinweisen.

Unter Verwendung von Streckenpunkten, welche Informationen über die Streckenabschnitte repräsentieren, erfolgt eine schrittweise Rekonstruktion der Streckenabschnitte. Es gibt drei verschiedene Arten von Streckenabschnitten, die berücksichtigt werden, nämlich Geraden, Kurvenabschnitte mit konstantem Radius und Kurvenabschnitte mit progressivem Radius (Klothoiden). Die Streckenpunkte werden seriell ausgegeben. Es wird untersucht, welches dieser Streckenabschnittsmodelle aktuell gerade vorliegt. Dazu wird eine iterative Methode verwendet. Ausgehend von den ersten beiden Streckenpunkten kann eine theoretische Gerade definiert werden. Nun wird ein dritter Streckenpunkt hinzugenommen. Wiederum wird bestimmt, ob eine Gerade vorliegt. Dazu müssen die drei Streckenpunkte in einem Streifen vorgebbarer Breite angeordnet sein. Die Breite wird als übliche Streckenbreite von 2 m vorgesehen. Hierzu wird das Modell einer Gerade mit der Methode der kleinsten Fehlerquadrate für diese drei Punkte neu berechnet. Wird der Streifen von 2 m Breite verlassen, wird die hypothetische Betrachtung als Gerade abgebrochen und eine Kreisbogengleichung aufgestellt, wobei der Kreisbogen bestmöglich durch die drei Streckenpunkte verläuft. Die Tangente am in Fahrtrichtung ersten Streckenpunkt muss dabei fast in einer Linie mit dem Richtungsvektor des Fahrzeugs liegen. Ist dies nicht der Fall, wird das Kreisbogenmodell zugunsten eines Klothoidenmodells, die entsprechend angepasst wird, verworfen. Liegt das Modell für die ersten drei Punkte vor, so wird der nächste Streckenpunkt einbezogen. Die entsprechende Gleichung des Modells einer angepassten Gerade, eines angepassten Kreisbogens bzw. einer angepassten Klothoide wird mit jedem neuen Streckenpunkt erneut aufgestellt und bestätigt oder verworfen. Wenn das Modell verworfen wird, so werden der letzte und der vorletzte Streckenpunkt zusammen mit dem neuen Streckenpunkt als neues Modell des Streckenabschnittes aufgestellt. Wenn Streckenpunkte bereitgestellt werden, deren Positionsabweichung in Bezug auf das gerade aktuelle Modell nur gering ist, so können diese Punkte lediglich auf eine Straßenkreuzung hinweisen. Denn wenn in diesem Augenblick eine andere Richtung eingeschlagen worden wäre, hätten diese Streckenpunkte exakt den Bereich des Richtungswechsels definiert. Dieses gilt sowohl für ein aktuelles Modell einer Gerade als auch einer leichten Krümmung, d. h. einer Klothoide bzw. eines Kreisbogens mit großem Radius. Wenn eine vorausliegende Straßenkreuzung erkannt wird, wird die Geschwindigkeit des Fahrzeuges auf eine für das sichere Passieren der Straßenkreuzung geeignete Geschwindigkeit abgesenkt. Eine solche maximal zulässige Geschwindigkeit ist 10 km/h. Wenn die Position der Straßenkreuzung bestimmt ist, sind folgende Informationen verfügbar: die relative Entfernung des Fahrzeuges zur Straßenkreuzung, die aktuelle Geschwindigkeit des Fahrzeuges sowie die Art des Fahrzeuges. Abhängig von der Fahrzeugart wird der Geschwindigkeitsverlauf entsprechend der Entfernung zur Straßenkreuzung berechnet. Die Geschwindigkeitsänderung wird linear angesetzt, also als komfortable Konstantverzögerung. Ist die Geschwindigkeit des Fahrzeuges höher als die errechnete Geschwindigkeit, geht eine entsprechende Warnleuchte an oder das Fahrzeug wird automatisch eingebremst.

Zusammenfassend ergibt die Erfindung eine Verminderung gefährlicher Situationen im Straßenverkehr durch eine stets an den voraus liegenden Streckenabschnitt angepasste Geschwindigkeit des Fahrzeugs. Es wird ein sicheres Heranfahren an voraus liegende Straßenkreuzungen und ein stets geringere als die physikalisch zulässige Höchstgeschwindigkeit in Kurven ermöglicht.

## Patentansprüche

1. Verfahren zur Bestimmung der Geometrie eines Streckenabschnittes, zur Ermittlung einer maximal möglichen Geschwindigkeit für ein den Streckenabschnitt befahrendes Fahrzeug, unter Verwendung von Information über den Streckenabschnitt repräsentierenden Streckenpunkten, wobei Streckenabschnittsdaten zwischen wenigstens drei benachbarten Streckenpunkten berechnet werden,
**dadurch gekennzeichnet, dass**
geprüft wird, ob zwei benachbarte Streckenpunkte jeweils vorgebbare Abstände zueinander unterschreiten und bejahenderweise Streckenabschnittsdaten durch die wenigstens drei benachbarten Streckenpunkte berechnet werden als a) Gerade, wenn die Streckenpunkte in einem geraden Streifen vorgebbarer Breite angeordnet sind, oder b) Kreisbogen, wenn die Streckenpunkte in einem konstant gekrümmten Streifen vorgebbarer Breite angeordnet sind und die Tangente am in Fahrtrichtung ersten der Streckenpunkte im Wesentlichen auf einem Richtungsvektor des Fahrzeuges zu liegen kommt, oder c) Klothoide, wenn die Streckenpunkte in einem progressiv gekrümmten Streifen vorgebbarer Breite angeordnet sind,
wobei jeweils die Geometrie des Streckenabschnittes im Bereich dieser Streckenpunkte in Form der berechneten Streckenabschnittsdaten bestimmt wird.

2. Verfahren nach Anspruch 1, wobei die Streckenabschnittsdaten durch die Streckenpunkte unter Verwendung der Methode der kleinsten Fehlerquadrate berechnet werden.

3. Verfahren nach Anspruch 1 oder 2, wobei als vorgebbare Breite für einen Streifen, in dem die Streckenpunkte angeordnet sind, etwa zwei Meter angesetzt sind.

4. Verfahren nach einem der vorhergehenden Ansprüche, wobei Streckenpunkte als Knoten und/oder Zwischenknoten ('shape points') aus einer digitalen Straßenkarte gewonnen werden.

5. Verfahren nach einem der vorhergehenden Ansprüche, wobei Streckenpunkte und/oder die aktuelle Fahrzeugposition unter Verwendung eines fahrzeugseitigen Positionsbestimmungsmittels, insbesondere eines GPS- und/oder GALILEO-Empfängers, gewonnen werden.

6. Verfahren nach einem der vorhergehenden Ansprüche, wobei Streckenpunkte unter Verwendung von Bilderfassung und - auswertung, insbesondere mittels Videobilderfassung und - auswertung, gewonnen werden.

7. Verfahren nach einem der vorhergehenden Ansprüche, wobei für den Fall, dass ein neuer Streckenpunkt verfügbar ist, die Geometrie des Streckenabschnittes dann beibehalten wird, wenn der Abstand des neuen Streckenpunktes zum letzten Streckenpunkt den jeweils vorgebbaren Abstand unterschreitet und der neue Streckenpunkt auf der durch die wenigstens drei Streckenpunkte bestimmten Gerade bzw. Kreisbogen bzw. Klothoide angeordnet ist, andernfalls geprüft wird, ob der neue sowie die beiden in Fahrtrichtung liegenden letzten Streckenpunkte jeweils vorgebbare Abstände zueinander unterschreiten und Bejahenderweise Streckenabschnittsdaten durch diese Streckenpunkte berechnet werden als a) Gerade, wenn die Streckenpunkte in einem geraden Streifen vorgebbarer Breite angeordnet sind, oder b) Kreisbogen, wenn die Streckenpunkte in einem konstant gekrümmten Streifen vorgebbarer Breite angeordnet sind und die Tangente am in Fahrtrichtung ersten der Streckenpunkte im Wesentlichen auf einem Richtungsvektor des Fahrzeuges zu liegen kommt, oder c) Klothoide, wenn die Streckenpunkte in einem progressiv gekrümmten Streifen vorgebbarer Breite angeordnet sind,
wobei jeweils die Geometrie des Streckenabschnittes im Bereich dieser Streckenpunkte in Form der berechneten Streckenabschnittsdaten bestimmt wird.

8. Verfahren nach einem der vorhergehenden Ansprüche, wobei für den Fall, dass ein neuer Streckenpunkt verfügbar ist, welcher den vorgebbaren Abstand überschreitet, eine Gerade als Streckengeometrie angenommen wird.

9. Verfahren nach einem der vorhergehenden Ansprüche, wobei wenn ein neuer Streckenpunkt verfügbar ist der außerhalb des Streifens vorgebbarer Breite angeordnet ist, geprüft wird, ob der neue Streckenpunkt Teil einer Straßenkreuzung ist, insbesondere zur fahrzeugseitigen Einstellung einer Straßenkreuzungs-Geschwindigkeit.

10. Verfahren nach einem der vorhergehenden Ansprüche, wobei eine lineare Geschwindigkeitsänderung auf die maximal mögliche Geschwindigkeit für den voraus liegenden Streckenabschnitt bzw. Straßenkreuzung vorgenommen wird.

11. Computerprogramm mit Programmcode-Mitteln, um alle Schritte eines Verfahrens nach einem der Ansprüche 1 bis 10 durchzuführen, wenn das Programm auf einem Computer ausgeführt wird.

12. Computerprogrammprodukt mit Programmcode-Mitteln, die auf einem computerlesbaren Datenträger gespeichert sind, um das Verfahren nach einem der Ansprüche 1 bis 10 durchzuführen, wenn das Computerprogramm auf einem Computer ausgeführt wird.

## Claims

1. Method for determining the geometry of a route section in order to determine a maximum possible speed for a vehicle driving along the route section, using information about route points that represent the route section, such that route section data between at least three adjacent route points are computed,
**characterised in that**
it is checked whether two adjacent route points are respectively closer to one another than specified distances and, if so, route section data through the at least three adjacent route points are counted as lying along a) a straight, if the route points are arranged in a straight lane of specifiable width, or b) a circular arc, if the route points are arranged in a lane of constant curvature and of specifiable width and the tangent at the first of the said route points essentially lies along a direction vector of the vehicle, and c) a clothoid, if the route points are arranged in a lane of progressively greater curvature and specifiable width,
the geometry of the route section in each case being determined in the area of the said route points in the form of the computed route section data.

2. Method according to Claim 1, such that the route section data through the route points are computed using the least squares method.

3. Method according to Claims 1 or 2, such that a distance of approximately two metres is chosen as the specifiable width of a lane in which the route points are arranged.

4. Method according to any of the preceding claims, such that route points are obtained as nodes and/or intermediate nodes ('shape points') from a digital road-map.

5. Method according to any of the preceding claims, such that route points and/or the current vehicle position are obtained using on-board position-determining means, in particular a GPS and/or GALILEO receiver.

6. Method according to any of the preceding claims, such that route points are obtained using image reception and evaluation means, in particular by means of video image reception and evaluation.

7. Method according to any of the preceding claims, such that in the event that a new route point is available, the geometry of the route section is retained if the distance of the new route point from the previous route point is smaller than the specifiable distance concerned and the new route point is located on the straight, or circular arc or clothoid determined by the at least three route points, and otherwise it is checked whether the new route point and the two previous route points along the driving direction are closer to one another than respective, specifiable distance and, if so, route section data through these route points are computed as a) straight, if the route points are arranged in a straight lane if specifiable width, or b) in a circular arc, if the route points are arranged in a lane of constant curvature and of specifiable width and the tangent at the first of the said route points essentially lies along a direction vector of the vehicle, or c) along a clothoid, if the route points are arranged in a lane of progressively greater curvature and specifiable width,
the geometry of the route section in each case being determined in the area of the said route points in the form of the computed route section data.

8. Method according to any of the preceding claims, such that in the event that a new route point is available, which is nearer than the specifiable distance, the route geometry is assumed to be straight.

9. Method according to any of the preceding claims, such that if a new route point is available which lies outside the lane of specifiable width, it is checked whether the new route point is part of a cross-road, in particular for the determination of a cross-road speed for the vehicle.

10. Method according to any of the preceding claims, such that a linear speed change to the maximum possible speed for the route section or cross-road lying ahead is carried out.

11. Computer program with program-code means designed to carry out all the steps of a method according to any of Claims 1 to 10 when the program is run on a computer.

12. Computer program product with program-code means, which are stored on a data carrier that can be read by a computer, in order to carry out the method according to any of Claims 1 to 10 when the computer program is run on a computer.

## Revendications

1. Procédé pour déterminer la géométrie d'un tronçon de route, pour déterminer une vitesse maximale possible pour un véhicule empruntant le tronçon de route, à l'aide d'une information relative aux points de route représentant le tronçon de route, les données de tronçon de route étant calculées entre au moins trois points de route adjacents,
**caractérisé en ce qu'**il consiste à vérifier si deux points de route adjacents se trouvent à des distances qui sont inférieures à des distances pouvant être prédéterminées et si oui, à calculer des données de tronçon de route au moins au moyen de ces trois points de route adjacents, a) en tant que ligne droite, lorsque les points de route sont disposés sur une bande rectiligne d'une largeur pouvant être prédéfinie, ou b) en tant qu'arc de cercle lorsque les points de route sont disposés sur une bande à courbure constante dont la largeur peut être prédéfinie et que la tangente au niveau du premier point de route dans la direction de déplacement coïncide essentiellement avec un vecteur de direction du véhicule, ou c) en tant que clothoïde, lorsque les points de route sont disposés sur une bande à courbure progressive dont la largeur peut être prédéfinie, la géométrie du tronçon de route dans la zone de ces points de route étant respectivement déterminée sous forme de données de tronçon de route calculées.

2. Procédé selon la revendication 1, **caractérisé en ce que** les données de tronçon de route par les points de route sont calculées au moyen de la méthode des plus petits carrés d'erreurs.

3. Procédé selon la revendication 1 ou 2, **caractérisé en ce que** la largeur prédéfinissable pour une bande sur laquelle les points de route sont disposés, est fixée à environ deux mètres.

4. Procédé selon l'une quelconque des revendications précédentes, les points de route étant obtenus en tant que noeuds et / ou noeuds intermédiaires (« shape points »)à partir d'une carte routière numérique.

5. Procédé selon l'une quelconque des revendications précédentes, les points de route et / ou la position actuelle du véhicule étant obtenus à l'aide d'un moyen de détermination de position côté véhicule, en particulier un récepteur GALILEO et / ou GPS.

6. Procédé selon l'une quelconque des revendications précédentes, les points de route étant obtenus au moyen d'une saisie et de repère d'image, en particulier au moyen d'une saisie et de repère d'image vidéo.

7. Procédé selon l'une quelconque des revendications précédentes, dans le cas où un nouveau point de route est disponible, la géométrie du tronçon de route est alors maintenue, lorsque la distance entre le nouveau point de route et le dernier point de route est inférieure à la distance prédéfinissable respective et que le nouveau point de route est disposé sur la droite et / ou l'arc de cercle et / ou la clothoïde déterminé(e) par au moins les trois points de route, sinon il est vérifié si le nouveau point de route ainsi que les deux derniers points de route se trouvant dans la direction de déplacement se trouvent à des distances inférieures à des distances prédéfinissables et si oui, des données de tronçon de route au moyen de ces points de route sont calculées a) en tant que ligne droite, lorsque les points de route sont disposés sur une bande rectiligne d'une largeur pouvant être prédéfinie, ou b) en tant qu'arc de cercle lorsque les points de route sont disposés sur une bande à courbure constante dont la largeur peut être prédéfinie et que la tangente au niveau du premier point de route dans la direction de déplacement coïncide essentiellement avec un vecteur de direction du véhicule, ou c) en tant que clothoïde, lorsque les points de route sont disposés sur une bande à courbure progressive dont la largeur peut être prédéfinie, la géométrie du tronçon de route dans la zone de ces points de route étant respectivement déterminée sous forme de données de tronçon de route calculées.

8. Procédé selon l'une quelconque des revendications précédentes, dans le cas où un nouveau point de route est disponible, lequel dépasse la distance prédéfinissable, on suppose qu'une droite est la géométrie de route.

9. Procédé selon l'une quelconque des revendications précédentes, lorsqu'un nouveau point de route, qui est disposé à l'extérieur de la bande de largeur prédéfinissable, est disponible, il est vérifié que le nouveau point de route est une partie d'un carrefour, en particulier pour régler la vitesse du véhicule dans le carrefour.

10. Procédé selon l'une quelconque des revendications précédentes, une modification de vitesse linéaire s'effectuant sur la vitesse maximale possible pour le tronçon de route à parcourir et / ou le carrefour.

11. Programme informatique avec des moyens de codage afin de procéder à l'ensemble des étapes d'un procédé selon l'une quelconque des revendications 1 à 10, lorsque le programme est exécuté sur un ordinateur.

12. Programme informatique avec des moyens de codage qui sont mémorisés sur un support de données lisible par ordinateur afin de mettre en oeuvre le procédé selon l'une quelconque des revendications 1 à 10, lorsque le programme informatique est exécuté sur un ordinateur.
